# EUROPEAN PATENT SPECIFICATION

(11) **EP 0 875 370 B1**
(45) Date of publication and mention of the grant of the patent: **17.10.2001**
(21) Application number: 98107742.3
(22) Date of filing: 28.04.1998
(51) Int. Cl.: B32B 15/08, B65D 65/40, B65D 77/20

(54) **Metal-laminate composite container with easily openable plastic top**
Laminierter Verbundbehälter aus Metall mit leicht zu öffnendem Deckel
Récipient composite laminé en métal avec un couvercle à ouverture facile

(30) Priority: 28.04.1997 JP 12496897
(43) Date of publication of application: 04.11.1998
(73) Proprietor: Showa Denko Plastic Products Co. Ltd., Tokyo 105-0011 (JP)
(72) Inventor: Miyauchi, Otohiko, Yokohama-shi, Kanagawa, 222-0004 (JP); Katayama, Masashi, Yokohama-shi, Kanagawa, 234-0056 (JP)
(74) Representative: Strehl Schübel-Hopf & Partner

(56) References cited:
- GB-A- 2 055 687

## Description

This invention relates to a composite container made of a metal laminate, with an easily openable top made of a plastic material. More particularly, it relates to a composite container composed of a top mainly made of a plastic material and a body mainly made of a metal laminate, wherein the top and the body are capable of being fused together to form an air-tight seal, and which container does not spoil the flavor of food or beverage content and is easy to open without use of an auxiliary means such as a can-opener.

In conventional easily openable can-like containers for food and beverages, a partially openable or fully openable top made of a metal sheet having a score is double-seamed together with a body made of a metal sheet with the aid of a compound material for forming a tight seal. A coating of a thermosetting resin such as an epoxy-phenolic resin is formed on the inner wall of the container to prevent impregnation of the food or beverage with the odor of metal or prevent corrosion of the metal. The top of the conventional easily openable container is usually made of an iron or aluminum sheet, and therefore, it has problems such that it is rigid and, when a pulling tab is pulled up by a finger, the nail is sometimes cracked or torn, or, after the top is opened, a finger is wounded by an sharp edge of the scored part of the top remaining attached to the body of container. Further, the coating of a thermosetting resin such as an epoxy-phenolic resin formed on the inner wall of the top and body of container is heated at a temperature of 150 to 250°C for several minutes. When the coating is heated, low-molecular-weight substances such as a residual organic solvent, unreacted starting materials, a curing agent and a plasticizer are apt to migrate into the food or beverage within the metal container. This leads to destroy of the flavor and fragrance inherently possessed by the food or beverage, and also a problem arises from a viewpoint of food sanitation. The compound material used for enhancing the seal attained by double-seaming the container also causes similar problems of migration of low-molecular-weight substances into the food or beverage.

Easily openable container tops made of a plastic material have been proposed as substitutes for the easily openable top of container made of metal (for example, Japanese Unexamined Patent Publication No. 59-221256, 61-287540, 62-78049 and 63-45014). A typical example of the easily openable plastic container tops have a multilayer structure composed of polypropylene/modified polypropylene/aluminum foil/polyurethane adhesive/polypropylene/injection-molded polypropylene. The layer of aluminum foil is thin, and thus, the top is easy to open, and, there is no fear such that when the top is opened, a nail is cracked or torn, or, after the top is opened, a finger is wounded by an sharp edge of the scored part of the top remaining attached to the body of container.

GB-A-2 055 687 discloses a film comprising a PET layer bonded to a metal (eg. aluminium) layer via an adhesive layer which may also comprise PET. The film is used both for a container and for a top.

As substitutes for the metal sheet having a coating of a thermosetting resin on an inner wall of the top and body of container, metal laminates have been proposed which have a multilayer structure composed of, for example, polyethylene terephthalate/iron or aluminum sheet/polyethylene terephthalate, or polypropylene/iron or aluminum sheet/polypropylene. The metal laminate can be subjected to drawing to fabricate a body of a two-piece can, or subjected to welding to fabricate a body of a three-piece can. The polyethylene terephthalate or polypropylene surface layer of the metal laminate is formed by polymerization for which a long time is required, and thus, it contains only a negligible amount of low-molecular-weight substances. Therefore there is no fear such that low-molecular-weight substances migrate into the food or beverage and the flavor and fragrance inherently possessed by the food or beverage are destroyed, and the metal laminates are preferable from a viewpoint of food sanitation.

However, the metal laminates are not suitable for fabrication of container tops because it is difficult to rivet a pulling tab on the top of container and make a score thereon. Therefore the top of the conventional easily openable container made of an iron or aluminum sheet is still practically used wherein a coating of an epoxy-phenolic resin is formed on the inner wall of the top, and a compound material for seal is used when the top and body are double-seamed. Thus problems remain unsolved in that the nail is sometimes cracked or torn, or, a finger is wounded by an sharp edge of the scored part of container, and there is a fear such that low-molecular-weight substances in the inner coating and the compound material are apt to migrate into the food or beverage within the container, leading to the destruction of the flavor and fragrance of food or beverage. It further causes problems of food sanitation, and occurrence of pin holes and slow leak in the bonded region between the top and body of container.

In view of the foregoing, a primary object of the present invention is to provide a metal laminate composite container with an easily openable plastic top, which is easily opened without cracking or tearing of a nail and does not spoil the flavor and fragrance of food and beverages, and the bonded region between the top and body of which has a high bond strength sufficient for use as a retorting container.

The inventors have found that, although it is an easily openable soft plastic top of container is difficult to double-seam together with a rigid metal body of container, if the surface layers to be bonded are composed of the same plastic material, then the top and body of container are capable of being thermally welded together to a satisfying extent, and this is prominent especially when the plastic material is polyethylene terephthalate or polypropylene. The invention has been completed based on this finding.

In one aspect of the present invention, there is provided a metal laminate composite container with an easily openable plastic top, which comprises a body of container and an easily openable plastic top, a flange of said body being edge welded together with a flange of said easily openable plastic top; said plastic top having a multilayer structure comprising (i) a polypropylene layer, (ii) a modified polypropylene layer, preferably having a carboxyl group or an acid anhydride group, (iii) an aluminum layer, (iv) an adhesive layer, (v) a polypropylene layer and (vi) an optional plastic layer, arranged in this order from the inside of container toward the outside thereof, and said body having a multilayer structure comprising (i') a polypropylene layer, (ii') a modified polypropylene layer, preferably having a carboxyl group or an acid anhydride group, (iii') an iron or aluminum layer and (iv') an optional outer coat layer, arranged in this order from the inside of container toward the outside thereof.

In another aspect of the present invention, there is provided a metal laminate composite container with an easily openable plastic top, which comprises a body of container and an easily openable plastic top, a flange of said body being edge welded together with a flange of said easily openable plastic top; said plastic top having a multilayer structure comprising (i) a polyethylene terephthalate layer, (ii) a modified polyethylene terephthalate layer, preferably having a melting point lower than that of the layer (i), or a polyurethane adhesive layer, (iii) an aluminum layer, (iv) an adhesive layer, (v) a polypropylene layer and (vi) an optional plastic layer, arranged in this order from the inside of container toward the outside thereof, and said body having a multilayer structure comprising (i') a polyethylene terephthalate layer, (ii') a modified polyethylene terephthalate layer, preferably having a melting point lower than that of the layer (i'), (iii') an iron or aluminum layer and (iv') an optional outer coat layer, arranged in this order from the inside of container toward the outside thereof.

In the accompanying drawings:
Figure 1 is a perspective illustration of one example of the container of the invention;
Fig. 2 is a vertical cross-sectional view of the container illustrated in Fig. 1;
Fig. 3 is a perspective illustration, partly broken away to show the cross-section, of a top of another example of the container of the invention;
Fig. 4 is a partial cross-sectional view of the top illustrated in Fig. 3, as its tab is pulled up;
Fig. 5 is an enlarged cross-sectional view illustrating the multilayer structure of a top of a container of the invention;
Fig. 6 is an enlarged cross-sectional view illustrating the multilayer structure of a body of the container shown in Fig. 5;
Fig. 7 is an enlarged cross-sectional view illustrating the multilayer structure of a top of another container of the invention; and
Fig. 8 is an enlarged cross-sectional view illustrating the multilayer structure of a body of the container shown in Fig. 7.

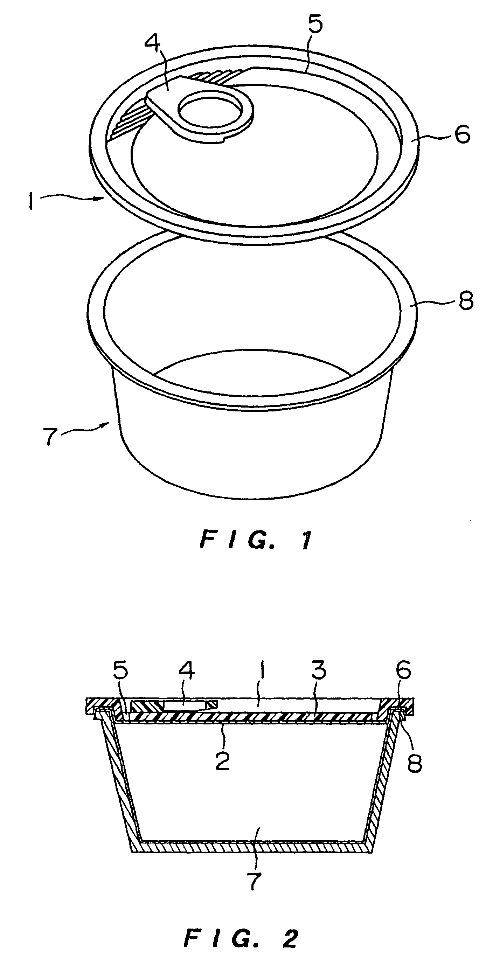

The metal laminate composite container with an easily openable plastic top of the invention comprises a top having a multilayer structure and a body having a multilayer structure. One example of the container is illustrated in Fig. 1 which is a perspective view showing separated top 1 and body 7, and in Fig. 2 which is a cross-sectional view showing the state in which the top 1 is superposed on the body 7.

Referring to Fig. 1 and Fig. 2, the top 1 of the container has a gas barrier layer 2 and a plastic layer 3 formed on the gas barrier layer 2. The plastic layer 3 is provided with a pulling tab 4 and has a score 5, by which the top 1 can easily be opened. The top 1 has a flange 6 at the periphery thereof, at which the top 1 is edge welded with the body 7. The body 7 is fabricated by drawing a metal sheet, and has a flange 8 at the upper periphery thereof which is fitted to the flange 6 of the top 1. After the body 7 is stuffed with food or beverage, the top 1 is superposed thereon and then is flange edge welded with the body 7 to give a stuffed container.

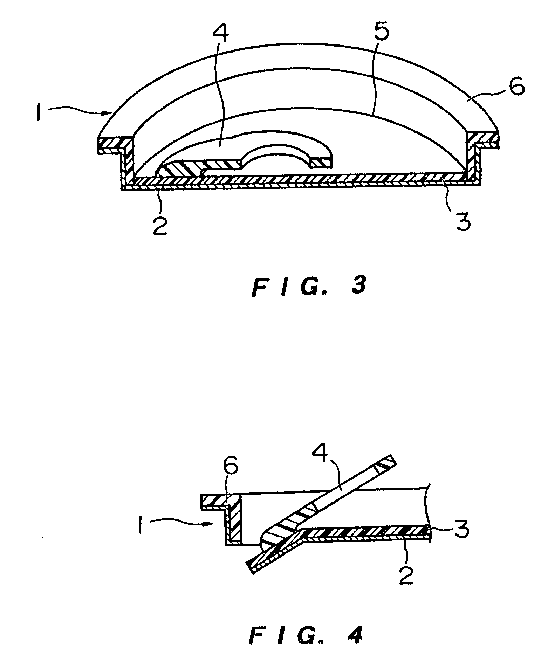

A top 1 of another example of container of the invention is shown in Fig. 3 which is a perspective illustration, partly broken away to show the cross-section, and in Fig. 4 which is a partial cross-sectional view of the top 1 shown in Fig. 3, as its tab 4 is pulled up. For opening the top 1, a finger is inserted into the hole of the tab 4 and the tab 4 is pulled up by the finger as illustrated in Fig. 4 (the finger is not shown in Fig. 4). When the tab 4 is pulled up, the gas barrier layer 2 is partly broken along a part of the score 5 in the vicinity of the fixed end of the tab 4, and finally, the tab 4 with a main part of the top 1 is pulled off whereby the top 1 is opened. The gas barrier layer 2 of the top 1 can be thin, and thus the top of the container of the invention is very easy to open as compared with the conventional container with an easily openable metal top.

In the container of the invention, the top 1 can be flange edge welded with the body 7 because the abutting surfaces of the top 1 and body 7 are composed of the same thermoplastic material, which is either polypropylene or polyethylene terephthalate.

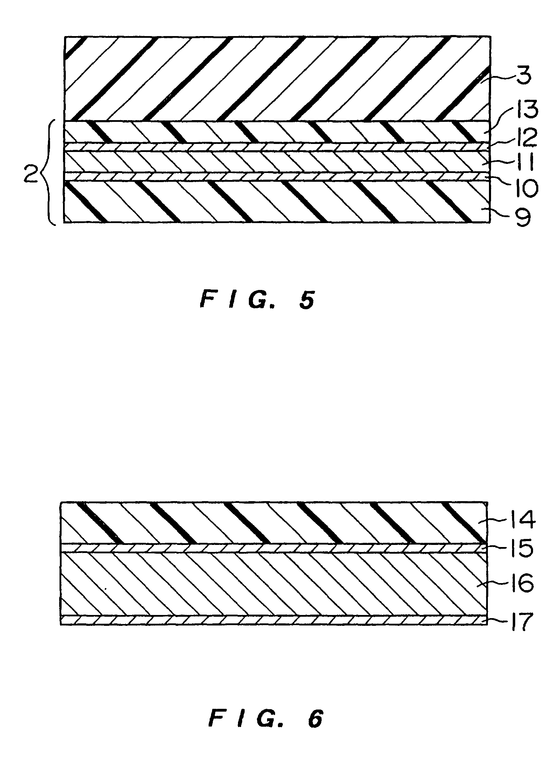

One example of the container of the invention comprises a plastic top with a multilayer structure illustrated in Fig. 5 and a body with a multilayer structure illustrated in Fig. 6. Referring to Fig. 5, the multilayer structure of the top of container comprises (i) a polypropylene layer 9, (ii) a modified polypropylene layer 10, (iii) an aluminum layer 11, (iv) an adhesive layer 12, (v) a polypropylene layer 13 and (vi) a polypropylene layer 3, arranged in the ascending order upward from the lowermost layer in Fig. 5, which corresponds to the order from the inside of container toward the outside thereof. The five layers (i), (ii), (iii), (iv) and (v) constitute a gas barrier layer 2. The uppermost polypropylene layer 3 (i.e., the outermost plastic layer of container top) is formed on the gas barrier layer by an injection molding.

The lowermost polypropylene layer 9 (i.e., the innermost plastic layer of container top) preferably has a thickness of 10 to 100 µm, more preferably 20 to 70 µm. If the polypropylene layer 9 has a thickness smaller than 10 µm, when foreign matter is undesirably present on the surface to be welded, the seal is apt to become defective. In contrast, if the polypropylene layer 9 has a thickness larger than 100 µm, a substantial amount of heat is required for welding and, when the top is opened, it may become difficult to break the top along the score.

The modified polypropylene layer 10 is preferably comprised of acid-modified polypropylene which has a carboxyl group or an acid anhydride group, introduced by grafting an unsaturated carboxylic acid or a functional derivative thereof such as anhydride, ester or ester metal salt onto polypropylene. Alternatively, the modified polypropylene is a copolymer prepared by copolymerization of propylene with an unsaturated carboxylic acid or a functional derivative thereof. As specific examples of the unsaturated carboxylic acid used, there can be mentioned acrylic acid, maleic acid, fumaric acid, tetrahydrophthalic acid, itaconic acid, citraconic acid, crotonic acid and isocrotonic acid. Of these unsaturated carboxylic acids and functional derivatives thereof, maleic acid and maleic anhydride are especially preferable.

The amount of the unsaturated carboxylic acid or functional derivative grafted or copolymerized is preferably in the range of 0.01 to 10% by weight, more preferably 0.05 to 5% by weight. If this amount is smaller than 0.01% by weight, the adhesion is apt to be poor. In contrast, if this amount exceeds 10% by weight, the fabrication quality becomes poor.

The acid modified polypropylene can be prepared by conventional methods. For example, an unsaturated carboxylic acid or its functional derivative, and an initiator such as an organic peroxide, e.g., di-tert.-butyl peroxide or 2,5-dimethyl-2,5-di-(tert.butylperoxy)-hexyne-3, are incorporated in polypropylene by a dry blending method, followed by melt kneading the mixture; or polypropylene is dissolved in an organic solvent and an unsaturated carboxylic acid or its functional derivative, and the initiator are incorporated in the polypropylene solution to allow the carboxylic acid or its derivative to react with polypropylene.

The modified polypropylene layer 10 preferably has a thickness of 3 to 5 µm. By the provision of the modified polypropylene layer 10 between the polypropylene layer 9 and the aluminum layer 11, a good adhesion can be obtained between the two layers 9 and 11. The acid-modified polypropylene also is beneficial in that the migration of low-molecular-weight substances into food or beverage upon retorting is prevented or minimized.

The aluminum layer 11 is preferably comprised of an aluminum foil having a thickness of 7 to 70 µm, more preferably 15 to 40 µm. By the provision of the aluminum layer 11, oxygen transmission through the top can be prevented and deterioration of food or beverage can be avoided. When the top and the body are flash edge welded by high frequency irradiation, heat is evolved whereby the polypropylene layer 9 is melted. If the aluminum layer 11 has a thickness smaller than 7 µm, there is the fear such that, when the container falls down, the top breaks along the score. In contrast, if the aluminum layer has a thickness larger than 70 µm, the production cost and the force required for opening the top are increased.

The adhesive layer 12 is preferably comprised of a modified polypropylene layer having a thickness of 3 to 5 µm or a polyurethane coating having a coating thickness of 2 to 8 g/m², more preferably 3 to 6 g/m². By the provision of the modified polypropylene or polyurethane adhesive layer 12 between the aluminum layer 11 and the polypropylene layer 13, a good adhesion between the two layers 11 and 13 can be obtained. The modified polypropylene layer is preferably comprised of the above-mentioned acid-modified polypropylene.

The polypropylene layer 13 preferably has a thickness of 10 to 70 µm, more preferably 20 to 40 µm. The polypropylene layer 13 withstands heat upon retorting. The polypropylene layer 13 is the outermost layer of the gas barrier layer 2 and thus is beneficial in that the adhesion between the gas barrier layer 2 and the outermost injection-molded polypropylene layer 3 is enhanced. If the polypropylene layer 13 has a thickness smaller than 10 µm, the processability tends to be degraded. Generally there is no need of the thickness exceeding 70 µm because a thicker outermost polypropylene layer is injection-molded on the layer 13.

The thickness of the gas barrier layer 2, i.e., the total thickness of the polypropylene layer 9, the modified polypropylene layer 10, the aluminum layer 11, the adhesive layer 12 and the polypropylene layer 13, is preferably in the range of 35 to 200 µm, more preferably 50 to 150 µm. If the gas barrier layer 2 has a thickness smaller than 35 µm, the falling impact strength of the container is poor. If the gas barrier layer 2 has a thickness larger than 200 µm, the top of container tends to become difficult to open.

For the production of the top of container, the gas barrier layer 2 composed of superposed layers 9, 10, 11, 12 and 13 is fabricated into a shape as illustrated in Fig. 1, and then, the shape is inserted into a mold for injection molding. A thermoplastic material such as polypropylene resin is injected into the mold whereby the outermost plastic layer 3 is formed on the multilayer shape.

The material for the outermost plastic layer 3 is not particularly limited provided that it is weldable or melt-bondable with the polypropylene layer 13. As preferable examples of the material for the plastic layer 3, there can be mentioned polypropylene or a polyblend of polypropylene with other resin, for example, polyethylene, polyvinyl chloride or polyamide.

A score can be made on the outermost plastic layer 3 simultaneously with the injection molding of the plastic layer 3. Alternatively, a ring-shaped part of the plastic layer 3 defining a peripheral part located outside the circular score and a disc-shaped part of the plastic layer 3 defining a central main part located inside the circular score are separately shaped, and the two parts are then engaged together so as to form the circular score with a narrow width.

The pulling tab 4 illustrated in Fig. 1 can be molded simultaneously with the injection molding of the plastic layer 3 so as to be integral with the plastic layer 3. Alternatively the pulling tab 4 can be prepared separately and then bonded, for example, by welding, to the plastic layer 3.

The outermost plastic layer 3 preferably has a thickness of 0.3 to 3 mm, more preferably 0.5 to 1.5 mm. If the plastic layer 3 has a thickness smaller than 0.3 mm, the strength and rigidity of the top tend to be poor. A thickness exceeding 3 mm is not needed from a viewpoint of strength and not preferable from a standpoint of appearance of the container.

Referring to Fig. 6, the multilayer structure of the body of container comprises (i') a polypropylene layer 14, (ii') a modified polypropylene layer 15, (iii') an iron or aluminum layer 16 and (iv') an outer coating layer 17, arranged in the descending order from the uppermost layer downward in Fig. 6, which corresponds to the order from the inside of container to the outside thereof.

The innermost polypropylene layer 14 and the modified polypropylene layer 15 can be formed as an integrated film by co-extrusion, and the integrated film can be thermally welded with the iron or aluminum layer 16. The total thickness of the polypropylene layer 14 and the modified polypropylene layer 15 is preferably 10 to 120 µm, more preferably 20 to 70 µm. The ratio of thickness of the polypropylene layer 14 to the modified polypropylene layer 15 is preferably in the range of 40/60 to 95/5, more preferably 70/30 to 90/10. If the total thickness of the two layers 14 and 15 is smaller than 10 µm, the seal tends to be defective when foreign matter is present on the surface to be welded. In contrast, if the total thickness of the two layers 14 and 15 exceeds 120 µm, a substantial amount of heat is required for flange edge welding. A thicker modified polypropylene layer 15 such that the thickness ratio of layer 14/layer 15 is smaller than 40/60 is not needed from the performance requirement and is costly. In contrast, if the thickness ratio of layer 14/layer 15 exceeds 95/5, the uniformity in thickness of the co-extruded laminate of two layers 14 and 15 become poor and sometimes the modified polypropylene layer 15 has holes through which the polypropylene layer 14 abuts on the iron or aluminum layer 16.

The modified polypropylene layer 15 is preferably comprised of a carboxyl group-modified polypropylene. By the provision of the modified polypropylene layer 15 between the polypropylene layer 14 and the iron or aluminum layer 16, the adhesion between the two layers 14 and 16 is enhanced to a sufficient extent for enabling deep drawing. Undesirable migration of low-molecular-weight substances from the carboxyl group-modified polypropylene layer 15 into the food or beverage occurs only to a negligible extent.

The iron or aluminum layer 16 can be comprised of a conventional iron or aluminum sheet. The thickness of the iron or aluminum sheet is preferably in the range of 0.1 to 0.35 mm, more preferably 0.15 to 0.3 mm.

Optionally an outer coat layer 17 is provided on the outer surface of the iron or aluminum layer 16 for preventing corrosion of the iron or aluminum layer 16. The provision of the outer coat layer 17 is effected, for example, by coating the outer surface of the iron or aluminum layer with a plastic paint or thermally welding a plastic film onto the outer surface of the iron or aluminum layer. The material for the outer coat layer 17 is not particularly limited. As examples of the material, there can be mentioned polyolefin such as polypropylene or polyethylene, polyethylene terephthalate or polyamide. The thickness of the outer coat layer 17 is preferably in the range of 0.05 to 2 mm.

A plastic-laminated metal sheet composed of the polypropylene layer 14, the modified polypropylene layer 15, the iron or aluminum layer 16 and the optional outer coat layer 17 is subjected to drawing for preparing a body of a two-piece container or to welding for preparing a body of a three-piece container. The body is provided with a flange for edge welding the body with the plastic top of container. The flange of the body preferably has a structure such that it closely fits the flange of the plastic top. The bonding width of the flanges is preferably in the range of 1 to 10 mm, more preferably 2 to 5 mm. If the bonding width is smaller than 1 mm, when foreign matter is present on the surface to be welded, it is possible that the seal becomes poor, pinholes occur or the falling impact strength is lowered. Generally a bonding width exceeding 10 mm is neither required for performance quality nor preferable in appearance.

The body of the container of the invention is stuffed with food or beverage and then the top of container and the body are edge welded together. The way by which the flange wedge welding is effected is not particularly limited, but high-frequency heating is preferable. When high-frequency heating is effected, Eddy-currents are set up in the aluminum layer of the top and in the iron or aluminum layer of the body by the high-frequency electromagnetic field and therefore induction heating is effected according to the Joule effect. Thus the polypropylene layer 9 in the flange of the top of container and the polypropylene layer 14 in the flange of the body are firmly thermally welded together.

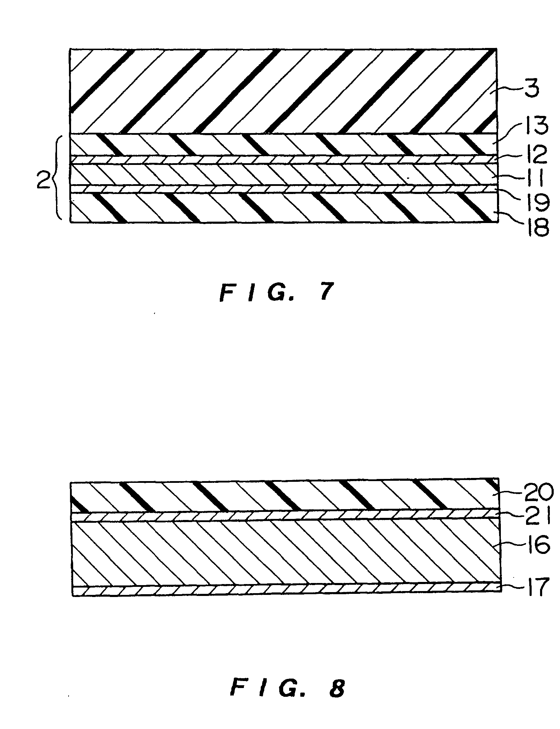

Another example of the container of the invention comprises a plastic top with a multilayer structure illustrated in Fig. 7 and a body with a multilayer structure illustrated in Fig. 8. Referring to Fig. 7, the multilayer structure of the top of container comprises (i) a polyethylene terephthalate layer 18, (ii) an adhesive layer 19, (iii) an aluminum layer 11, (iv) an adhesive layer 12, (v) a polypropylene layer 13 and (vi) a plastic layer 3, arranged in the ascending order upward from the lowermost layer in Fig. 7, which corresponds to the order from the inside of container toward the outside thereof. The five layers (i), (ii), (iii), (iv) and (v) constitute a gas barrier layer 2. The uppermost plastic layer 3 (i.e., the outermost plastic layer of container top) is formed on the gas barrier layer by an injection molding.

The lowermost polyethylene terephthalate layer 18 (i.e., the innermost plastic layer of container top) preferably has a thickness of 10 to 50 µm, more preferably 15 to 30 µm. If the polyethylene terephthalate layer 18 has a thickness smaller than 10 µm, when foreign matter is present on the surface to be welded, the seal is apt to become defective. In contrast, if the polyethylene terephthalate layer 18 has a thickness larger than 50 µm, a substantial amount of heat is required for welding and, when the top is opened, it may become difficult to break the top along the score.

The adhesive layer 19 is comprised of modified polyethylene terephthalate or a polyurethane adhesive. The modified polyethylene terephthalate is preferably comprised of a copolyester having ethylene terephthalate units and comonomer units derived from a polycarboxylic acid or a polyhydric alcohol. The polycarboxylic acid includes, for example, isophthalic acid, adipic acid or sebacic acid. The polyhydric alcohol includes, for example, ethylene glycol and 1,4-butanediol. The modified polyethylene terephthalate has a melting point lower than that of polyethylene terephthalate. The difference of the melting point is preferably 50 to 150°C, and more preferably 60 to 130°C. If the temperature difference is too small, the workability for lamination at a high temperature is poor. The copolyester is commercially available and includes, for example, Chemit supplied by Toray Inc., Vitel supplied by Goodyear Co., and Eastbond supplied by Eastman Kodak Co.

The coating thickness of the polyurethane adhesive layer 19 is preferably 2 to 8 g/m² and more preferably 3 to 6 g/m². By the provision of the modified polyethylene terephthalate or polyurethane adhesive layer 19 between the polyethylene terephthalate layer 18 and the aluminum layer 11, a good adhesion can be obtained between the two layers 18 and 11.

The constitution and performance of the multilayer structure composed of the aluminum layer 11, the adhesive layer 12, polypropylene layer 13 and the outermost plastic layer 3 illustrated in Fig. 7 is the same as those of the multilayer structure composed of the aluminum layer 11, the adhesive layer 12, polypropylene layer 13 and the outermost plastic layer 3, as explained above with reference to Fig. 5.

The thickness of the gas barrier layer 2, i.e., the total thickness of the polyethylene terephthalate layer 18, the adhesive layer 19, the aluminum layer 11, the adhesive layer 12 and the polypropylene layer 13, is preferably in the range of 35 to 150 µm, more preferably 40 to 140 µm. If the gas barrier layer 2 has a thickness smaller than 35 µm, the falling impact strength of the container is poor. If the gas barrier layer 2 has a thickness larger than 150 µm, the top of container tends to become difficult to open.

Referring to Fig. 8, the multilayer structure of the body of container comprises (i') a polyethylene terephthalate layer 20, (ii') a modified polyethylene terephthalate layer 21, (iii') an iron or aluminum layer 16 and (iv') an outer coating layer 17, arranged in the descending order from the uppermost layer downward in Fig. 8, which corresponds to the order from the inside of container to the outside thereof.

The modified polyethylene terephthalate layer 21 has a melting point lower than that of the polyethylene terephthalate layer 20, and is preferably comprised of the same modified polyethylene terephthalate as that explained above as to the adhesive layer 19. The innermost polyethylene terephthalate layer 20 and the modified polyethylene terephthalate layer 21 can be formed as an integrated film by co-extrusion, and the integrated film can be thermally adhered onto the iron or aluminum layer 16 in a manner such that the modified polyethylene terephthalate layer 21 is thermally welded to the iron or aluminum layer 16, whereby a metal laminate comprising the polyethylene terephthalate layer 20 and the modified polyethylene terephthalate layer 21 can be prepared.

Alternatively, an integrated film composed of the polyethylene terephthalate layer 20 and the modified polyethylene terephthalate layer 21 can be made by a process wherein a biaxially drawn crystalline polyethylene terephthalate film is thermally welded to the iron or aluminum layer whereby a polyethylene terephthalate film having a two-layer structure is formed on the iron or aluminum layer. One layer of the two-layer structure constitutes the modified polyethylene terephthalate layer 21 which is in contact with the iron or aluminum layer 16 and has a reduced crystallinity, and the other layer of the two-layer structure constitutes the polyethylene terephthalate layer 20 which is on the opposite side of the film and keeps a high crystallinity.

The total thickness of the polyethylene terephthalate layer 20 and the modified polyethylene terephthalate layer 21 is preferably 10 to 120 µm, more preferably 20 to 70 µm. The ratio of thickness of the polyethylene terephthalate layer 20 to the modified polyethylene terephthalate layer 21 is preferably in the range of 40/60 to 95/5, more preferably 70/30 to 90/10. If the total thickness of the two layers 20 and 21 is smaller than 10 µm, the seal tends to be defective when foreign matter is present on the surface to be welded. In contrast, if the total thickness of the two layers 20 and 21 exceeds 120 µm, a substantial amount of heat is required for flange edge welding. A thicker modified polyethylene terephthalate layer 21 such that the thickness ratio of layer 20/layer 21 is smaller than 40/60 is not needed from the performance requirement and is costly. In contrast, if the thickness ratio of layer 20/layer 21 exceeds 95/5, the uniformity in thickness of the co-extruded laminate of two layers 20 and 21 become poor and sometimes the modified polyethylene terephthalate layer 21 has holes through which the polyethylene terephthalate layer 20 abuts on the iron or aluminum layer 16. By the provision of the modified polyethylene terephthalate layer 21 between the polyethylene terephthalate layer 20 and the iron or aluminum layer 16, the adhesion between the two layers 20 and 16 is enhanced to a sufficient extent for enabling deep drawing.

The constitution and performance of the iron or aluminum layer 16 and the outer coat layer 17 illustrated in Fig. 8 is the same as the iron or aluminum layer 11 and the outer coat layer 17, as explained above with reference to Fig. 6.

In the metal laminate composite container with a plastic easily openable top of the invention, the plastic easily openable top and the metal laminate body are edge welded together at the respective flange portions. Therefore there is no fear of separation of the top from the body of container. Even if the flange portions are distorted when the container is fallen down, the soft top can be distorted without breakage in complete conformity with the distorted metal laminate body. Thus pin holes and slow leaks do not occur in the welded flange portions. This is in contrast to a conventional container composed of a metal body and an easily openable metal top which has a problem of occurrence of pinholes and throw-leaks at a double-seam part between the body and the top. The top of the container of the present invention is very easy to open, and, there is no fear of cracking or tearing of a nail when it is opened, nor wounding of a finger by an sharp edge of the scored part of the top after the top is opened. The flavor or fragrance of the food or beverage within the container is not spoiled and the container has no problem in food sanitation. Thus the container of the present invention is especially useful as a retorting container.

The invention will now be described specifically by the following examples that by no means limit the scope of the invention.

In the following examples and comparative examples, the performance characteristics of a container were evaluated by the following methods.

### (1) Ease of opening

A top of a container was opened and ease of the opening was tested by testing panelists. The test results were evaluated according to the following criteria and expressed by five ratings of -2 (worst), -1 (poor), 0 (moderate), 1 (good) and 2 (excellent). The test was conducted by twenty panelists and the results were expressed by the average rating.

### Criteria:

(i) Ease of inserting the tip of a finger into the ring of tab.
(ii) Pain felt when the tip of a finger is inserted into the ring of tab.
(iii) Ease of raising up the tab so that an end of the tab penetrates the top of container.
(iv) Force required for pulling upward the tab at the initial stage.
(v) Force required for pulling upward the tab in the mid course of opening.
(vi) Ease of pulling off the top.

### (2) Light absorbance

A container charged with distilled water was retorted in hot water under sterilizing conditions, i.e., at a temperature of 125°C for 40 minutes by using a retorting vessel, and then, the light absorbance of the distilled water was measured by using a cell with an optical path of 10 mm at a wavelength of 195 nm, 225 nm and 300 nm.

### (3) Amount of evaporation residue

A container charged with distilled water was retorted in hot water at a temperature of 125°C for 40 minutes by using a retorting vessel, and then, the distilled water was evaporated to dryness by using a rotary evaporator. The thus-obtained residue was dried at a temperature of 105°C for 4 hours. The dried residue was weighed and the weight (mg) was divided by the surface area (m²) of the container to determine the amount (mg/m²) of the evaporation residue.

### (4) Ingredient in evaporation residue

The evaporation residue obtained by the procedure mentioned above in (3) was dissolved in water and analyzed by a gas chromatography mass spectrometer.

### (5) Flavor of distilled water

Retorting was conducted by the same procedure as that described above in (2), and then, the distilled water was placed in a cup. Intensity of offensive flavor, degree of offensiveness of flavor, intensity of a bitter taste, unpleasantness of a bitter taste and acceptability as drinking water of the distilled water were evaluated by twenty-two blindfolded panelists.

### Example 1

A film having a multilayer structure for a gas barrier layer of a container, which was composed of (i) a polypropylene layer having a thickness of 42 µm, (ii) an acid-modified polypropylene layer having a thickness of 3 µm, (iii) an aluminum foil having a thickness of 30 µm, (iv) a polyurethane adhesive layer having a coating thickness of 5 g/m², and (v) a polypropylene layer having a thickness of 30 µm, arranged in this order from the inside to outside of container, was inserted in a mold. The acid-modified polypropylene layer was composed of polypropylene onto which 0.5% by weight of maleic anhydride had been grafted. Polypropylene was injection-molded onto the inserted multilayer film to give a multilayer plastic top having a thickness of 1.0 mm, a circular score having a width of 0.8 mm and a flange having a contact width of 3.0 mm to be welded with a metal body of container. A pulling tab was adhered to the top whereby a plastic top having a shape illustrated in Fig. 1 and Fig. 2 was obtained.

A metal laminate sheet having a multilayer structure composed of (i) a polypropylene layer having a thickness of 40 µm, (ii) a carboxyl group-modified polypropylene layer having a thickness of 10 µm and (iii) an iron sheet having a thickness of 0.23 mm was drawn in a manner such that a circular flange with a contact width of 3 mm was formed to prepare a body of container which had a shape illustrated in Fig. 1 and Fig. 2.

The body was charged with 250 ml of distilled water and the plastic top was fitted thereon. By using a high-frequency heating welder, a flange edge welding between the plastic top and the metal laminate body was conducted at a high-frequency current of 200 kHz, an oscillation time of 1.8 seconds, a voltage of 180 V and an electrical current of 12 A to give a container.

The container having charged with distilled water was placed in a retort vessel and retorted in hot water at a temperature of 125°C for 40 minutes.

Ease of opening of the top of container was evaluated by twenty panelists. The evaluation results are shown in Table 1.

After the retorting, the light absorbance of the distilled water and the amount of evaporation residue of the distilled water were measured, and the ingredient of evaporation residue was analyzed. The results are shown in Table 2 and Table 3.

### Example 2

A film having a multilayer structure for a gas barrier layer of a container, which was composed of (i) a biaxially drawn polyethylene terephthalate film having a thickness of 20 µm, (ii) an aluminum foil having a thickness of 30 µm, (iii) a polyurethane adhesive layer with a coating thickness of 5 g/m² and (iv) a polypropylene layer having a thickness of 30 µm, arranged in this order from the inside to outside of container, was inserted in a mold. Polypropylene was injection-molded onto the inserted multilayer film to give a multilayer plastic top having a thickness of 1.0 mm, a circular score having a width of 0.8 mm and a flange having a contact width of 3.0 mm to be welded with a metal body of container. A pulling tab was adhered to the top whereby a plastic top having a shape illustrated in Fig. 1 and Fig. 2 was obtained.

Polyethylene terephthalate having a melting point of 260°C and modified polyethylene terephthalate having a melting point of 190°C ("Chemit" R-1450 supplied by Toray Inc.) were co-extruded to form a bilayer film having a thickness of 50 µm (the two layers had a thickness of 30 µm and 20 µm, respectively). The bilayer film was laminated with an iron sheet having a thickness of 0.23 mm, maintained at 250°C, so that the modified polyethylene terephthalate layer was adhered onto the iron sheet. Then the hot laminate was rapidly cooled to prepare a metal laminate sheet for a body of container. The metal laminate sheet was drawn in a manner such that the polyethylene terephthalate film constituted the inner layer of a body of container and a circular flange with a contact width of 3.0 mm was formed. Thus a body of container having a shape illustrated in Fig. 1 and Fig. 2 was obtained.

The body was charged with 250 ml of distilled water and the plastic top was fitted thereon. By using a high-frequency heating welder, a flange edge welding between the plastic top and the metal laminate body was conducted at a high-frequency current of 200 kHz, an oscillation time of 2.5 seconds, a voltage of 180 V and an electrical current of 12 A to give a container.

The container having charged with distilled water was placed in a retort vessel and retorted in hot water at a temperature of 125°C for 40 minutes.

Ease of opening of the top of container was evaluated by twenty panelists. The evaluation results are shown in Table 1.

After the retorting, the light absorbance of the distilled water and the amount of evaporation residue of the distilled water were measured, and the ingredients of the evaporation residue were analyzed. The results are shown in Table 2 and Table 3.

### Comparative Example 1

An iron sheet with a thickness of 0.23 mm having an epoxy-phenolic resin inner coating was fabricated into a cylindrical body. An iron sheet disc made of the same iron sheet as mentioned above and having the epoxy-phenolic resin inner coating was double-seamed with the cylindrical body through a compound material inserted in the seamed part to fabricate a body of container. The body of container was charged with 250 ml of distilled water, and then, the body was double-seamed with a fully easily openable top made of an aluminum sheet through a compound material inserted in the seamed part whereby a three-piece container was fabricated.

The three-piece container having charged with distilled water was placed in a retort vessel and retorted in hot water at a temperature of 125°C for 40 minutes.

Ease of opening of the top of container was evaluated by twenty panelists. The evaluation results are shown in Table 1.

After the retorting, the light absorbance of the distilled water and the amount of evaporation residue of the distilled water were measured, and the ingredient of evaporation residue was analyzed. The results are shown in Table 2 and Table 3.

An organoleptic test for evaluating intensity of offensive flavor, degree of offensiveness of flavor, intensity of a bitter taste, unpleasantness of a bitter taste and acceptability as drinking water of the water was conducted on the distilled water after the retorting was conducted by twenty-two panelists. For comparison this organoleptic test was conducted on both of the distilled water obtained in Example 1 and the distilled water obtained in Comparative Example 1. The results are shown in Table 4. The numerals in Table 4 means the number of panelists who felt the evaluated property concerned more intensely or strongly in the distilled water obtained in said example than in the distilled water obtained in the other example. For example, as for the evaluation of "offensive flavor", numeral "3" in the column of Example 1 means that three panelists felt an offensive flavor more intensely for the distilled water obtained in Example 1 than that for the distilled water obtained in Comparative Example 1, and, numeral "19" in the column of Comparative Example 1 means that 19 panelists felt an offensive flavor more intensely for the distilled water obtained in Comparative Example 1 than that for the distilled water obtained in Example 1. Asterisk * means that a significance is found at a significance level of 5 %, and double asterisk ** means that a significance is found at a significance level of 1 %.

### Comparative Example 2

A three-piece container was fabricated by the same procedures as described in Comparative Example 1 wherein a fully easily openable iron sheet top made of an iron sheet with a thickness of 0.23 mm having an epoxy-phenolic resin inner coating was used instead of the fully easily openable aluminum top with all other conditions and procedures remaining the same.

Ease of opening of the top of container was evaluated by twenty panelists. The evaluation results are shown in Table 1.

**Table 1**

| | Example | | Comparative Example | |
|---|---|---|---|---|
| | 1 | 2 | 3 | 4 |
| Ease of insertion of finger tip into tab | 0.1 | 0.1 | 0.1 | 0.0 |
| Pain felt upon insertion of finger tip into tab | 0.0 | 0.1 | 0.2 | -0.6 |
| Ease of raise up tab to penetrate top | 0.5 | 0.4 | -0.4 | -0.8 |
| Force for pulling up tab at initial stage. | 0.2 | 0.2 | -0.6 | -1.3 |
| Force for pulling upward tab in course of opening | 0.3 | 0.3 | -0.5 | -0.7 |
| Ease of pulling off top | 0.2 | 0.3 | -0.6 | -1.4 |
| Average rating | 0.2 | 0.2 | -0.3 | -0.8 |

As seen from Table 1, the container of the invention with a plastic top is easier to open than the container with a fully easily openable iron top of Comparative Example 2, and also than the container with a fully easily openable aluminum top of Comparative Example 1 which is easier to open than the container of Comparative Example 2.

**Table 2**

| | Wavelength | Example | | Compara. Example 1 |
|---|---|---|---|---|
| | | 1 | 2 | |
| Light absorbance | 195 nm | 0.08 | 0.10 | 0.72 |
| | 225 nm | 0.02 | 0.03 | 0.23 |
| | 300 nm | 0.00 | 0.01 | 0.03 |

As seen from Table 2, the ditilled water charged in the container of the invention (Examples 1 and 2) and retorted under sterilizing conditions exhibited a light absorbance at a wavelength of ultraviolet region which is smaller than that of the distilled water charged in the container with an aluminum top (Comparative Example 1). Namely the soluble organic matter in the container of the invention is very small.

**Table 3**

| | Example | | Comparative Example 1 |
|---|---|---|---|
| | 1 | 2 | |
| Amount of evaporation residue (mg/m²) | 12.0 | 12.7 | 41.5 |
| Ingredients in evaporation residue | Antioxidant | Ester oligomers | Bisphenol A Derivs. of bisphenol A Plasticizer |

As seen from Table 3, the amount of soluble organic matter in the distilled water charged in the container of the invention (Examples 1 and 2) and retorted under sterilizing conditions is about one third of the amount thereof in the distilled water charged in the container with an aluminum top (Comparative Example 1) and similarly retorted. It is to be noted that the soluble organic matter from the container of Comparative Example 1 comprises bisphenol A, plasticizer and others which in recent years present problems from a viewpoint of food sanitation. In contrast, organic soluble matter from the container of the invention has no problem from a viewpoint of food sanitation.

**Table 4**

| | Example 1 | Comparative Example 2 | Significance |
|---|---|---|---|
| Intensity of offensive flavor | 3 | 19 | ** |
| Degree of offensiveness of flavor | 3 | 19 | ** |
| Intensity of a bitter taste | 5 | 17 | * |
| Unpleasantness of a bitter taste | 5 | 17 | * |
| Acceptability as drinking water | 19 | 3 | ** |

As seen from the results of organoleptic examination of flavor and fragrance of the distilled water retorted under sterilizing conditions, shown in Table 4, there is a significance between the container of the invention and the container of Comparative Example 1 at a significance level of 1 % and 5 %. The container of the invention is characterized as much reduced soaking of the offensive flavor or unpleasant taste into the distilled water, and thus, being especially suitable for a container for food and beverages.

## Claims

1. A metal laminate composite container with an easily openable plastic top, which comprises a body of container and an easily openable plastic top, a flange of said body being edge welded together with a flange of said easily openable plastic top; said plastic top having a multilayer structure comprising (i) a polypropylene layer, (ii) a modified polypropylene layer, (iii) an aluminum layer, (iv) an adhesive layer and (v) a polypropylene layer, arranged in this order from the inside of container toward the outside thereof, and said body having a multilayer structure comprising (i') a polypropylene layer, (ii') a modified polypropylene layer and (iii') an iron or aluminum layer, arranged in this order from the inside of container toward the outside thereof.

2. The metal laminate composite container according to claim 1, wherein the polypropylene layer (i) in the plastic top has a thickness of 10 to 100 µm.

3. The metal laminate composite container according to claim 1 or 2, wherein the aluminum layer (iii) in the plastic top is comprised of an aluminum foil having a thickness of 7 to 70 µm.

4. The metal laminate composite container according to any of claims 1 to 3, wherein the adhesive layer (iv) in the plastic top is comprised of a modified polypropylene layer or polyurethane adhesive.

5. The metal laminate composite container according to any of claims 1 to 4, wherein said modified polypropylene layer (ii), said modified polypropylene layer constituting the adhesive layer (iv), and said modified polypropylene layer (ii') are comprised of polypropylene having a carboxyl group or an acid anhydride group, which has been introduced by modifying polypropylene with an unsaturated carboxylic acid or a functional derivative thereof.

6. The metal laminate composite container according to any of claims 1 to 5, wherein the polypropylene layer (v) in the plastic top has a thickness of 10 to 70 µm.

7. The metal laminate composite container according to any of claims 1 to 6, wherein the total thickness of the polypropylene layer (i), the modified polypropylene layer (ii), the aluminum layer (iii), the adhesive layer (iv) and the polypropylene layer (v) in the plastic top is in the range of 35 to 200 µm.

8. The metal laminate composite container according to any of claims 1 to 7, wherein the plastic top further has an outermost plastic layer formed on the polypropylene layer (v), which has a thickness of 0.3 to 3 mm.

9. The metal laminate composite container according to any of claims 1 to 8, wherein the total thickness of the polypropylene layer (i') and the modified polypropylene layer (ii') in the body of container is in the range of 10 to 120 µm, and the ratio in thickness of the polypropylene layer (i') to the modified polypropylene layer (ii') is in the range of 40/60 to 95/5.

10. The metal laminate composite container according to any of claims 1 to 9, wherein the iron or aluminum layer (iii') in the body of the container is formed of an iron or aluminum sheet having a thickness of 0.1 to 0.35 mm.

11. The metal laminate composite container according to any of claims 1 to 10, wherein the body of container further has an outermost plastic layer formed on the iron or aluminum layer (iii'), which has a thickness of 0.3 to 3 mm.

12. A metal laminate composite container with an easily openable plastic top, which comprises a body of container and an easily openable plastic top, a flange of said body being edge welded together with a flange of said easily openable plastic top; said plastic top having a multilayer structure comprising (i) a polyethylene terephthalate layer, (ii) a modified polyethylene terephthalate layer or a polyurethane adhesive layer, (iii) an aluminum layer, (iv) an adhesive layer and (v) a polypropylene layer, arranged in this order from the inside of container toward the outside thereof, and said body having a multilayer structure comprising (i') a polyethylene terephthalate layer, (ii') a modified polyethylene terephthalate layer and (iii') an iron or aluminum layer, arranged in this order from the inside of container toward the outside thereof.

13. The metal laminate composite container according to claim 12, wherein the polyethylene terephthalate layer (i) in the plastic top has a thickness of 10 to 50 µm.

14. The metal laminate composite container according to claim 12 or 13, wherein the aluminum layer (iii) in the plastic top is comprised of an aluminum foil having a thickness of 7 to 70 µm.

15. The metal laminate composite container according to any of claims 12 to 14, wherein the adhesive layer (iv) in the plastic top is comprised of a polyurethane coating.

16. The metal laminate composite container according to any of claims 12 to 15, wherein the polypropylene layer (v) in the plastic top has a thickness of 10 to 70 µm.

17. The metal laminate composite container according to any of claims 12 to 16, wherein the plastic top further has an outermost plastic layer formed on the polypropylene layer (v), which has a thickness of 0.3 to 3 mm.

18. The metal laminate composite container according to any of claims 12 to 17, wherein the total thickness of the polyethylene terepthalate layer (i), the adhesive layer (ii), the aluminum layer (iii), the adhesive layer (iv) and the polypropylene layer (v) in the plastic top is in the range of 35 to 150 µm.

19. The metal laminate composite container according to any of claims 12 to 18, wherein said modified polyethylene terephthalate layer (ii) in the plastic top and said modified polyethylene terephthalate layer (ii') in the body of container are comprised of a co-polyester having ethylene terephthalate units and units derived from at least one compound selected from polycarboxylic acids and polyhydric alcohols; and said modified polyethylene terephthalate layer (ii) and said modified polyethylene terephthalate layer (ii') have a melting point lower than that of the polyethylene terephthalate layer (i) and that of the polyethylene terephthalate layer (i'), respectively.

20. The metal laminate composite container according to any of claims 12 to 19, wherein the total thickness of the polyethylene terephthalate layer (i') and the modified polyethylene terephthalate layer (ii') in the body of container is in the range of 10 to 120 µm, and the ratio in thickness of the polyethylene terephthalate layer (i') to the modified polyethylene terephthalate layer (ii') is in the range of 40/60 to 95/5.

21. The metal laminate composite container according to any of claims 12 to 20, wherein the iron or aluminum layer (iii') in the body of container is comprised of an iron or aluminum sheet having a thickness of 0.1 to 0.35 mm.

22. The metal laminate composite container according to any of claims 12 to 21, wherein the body of container further has an outermost plastic layer formed on the iron or aluminum layer (iii'), which has a thickness of 0.3 to 3 mm.

## Patentansprüche

1. Metallkaschierter Verbundbehälter mit einem leicht zu öffnenden Kunststoffdeckel, welcher einen Behälterkörper und einen leicht zu öffnenden Kunststoffdeckel umfaßt, wobei ein Rand des Körpers mit einem Rand des leicht zu öffnenden Kunststoffdeckels an den Kanten verschweißt ist, wobei der Kunststoffbehälter eine Mehrschichtstruktur hat, welche (i) eine Polypropylenschicht, (ii) eine modifizierte Polypropylenschicht, (iii) eine Aluminiumschicht, (iv) eine Haftschicht und (v) eine Polypropylenschicht aufweist, die von der Innenseite in Richtung der Außenseite des Behälters in dieser Reihenfolge angeordnet sind, und wobei der Körper eine Mehrschichtstruktur hat, welche (i') eine Polypropylenschicht, (ii') eine modifizierte Polypropylenschicht und (iii') eine Eisen- oder Aluminiumschicht umfaßt, welche von der Innenseite in Richtung der Außenseite des Behälters gesehen in dieser Reihenfolge angeordnet sind.

2. Metallkaschierter Verbundbehälter nach Anspruch 1, wobei die Polypropylenschicht (i) in dem Kunststoffdeckel eine Dicke von 10 bis 100 µm hat.

3. Metallkaschierter Verbundbehälter nach Anspruch 1 oder 2, wobei die Aluminiumschicht (iii) in dem Kunststoffdeckel aus einer Aluminiumfolie einer Dicke von 7 bis 70 µm besteht.

4. Metallkaschierter Verbundbehälter nach einem der Ansprüche 1 bis 3, wobei die Haftschicht (iv) in dem Kunststoffdeckel aus einer Schicht aus modifiziertem Polypropylen oder einem Polyurethan-Klebmittel besteht.

5. Metallkaschierter Verbundbehälter nach einem der Ansprüche 1 bis 4, wobei die Schicht aus modifiziertem Polypropylen (ii), die Schicht aus modifiziertem Polypropylen, welche die Haftschicht bildet (iv) und die Schicht aus modifiziertem Polypropylen (ii') aus Polypropylen, in welches Carboxylgruppen oder Säureanhydridgruppen durch Modifizieren von Polypropylen mit einer ungesättigten Carbonsäure oder einem funktionellen Derivat dieser eingeführt worden sind, besteht.

6. Metallkaschierter Verbundbehälter nach einem der Ansprüche 1 bis 5, wobei die Polypropylenschicht (v) in dem Kunststoffdeckel eine Dicke von 10 bis 70 µm hat.

7. Metallkaschierter Verbundbehälter nach einem der Ansprüche 1 bis 6, wobei die Gesamtdicke der Polypropylenschicht (i), der modifizierten Polypropylenschicht (ii), der Aluminiumschicht (iii), der Haftschicht (iv) und der Polypropylenschicht (v) in dem Kunststoffdeckel im Bereich von 35 bis 200 µm ist.

8. Metallkaschierter Verbundbehälter nach einem der Ansprüche 1 bis 7, wobei der Kunststoffdeckel weiterhin eine auf der Polypropylenschicht (v) ausgebildete äußere Kunststoffschicht aufweist, die eine Dicke von 0,3 bis 3 mm hat.

9. Metallkaschierter Verbundbehälter nach einem der Ansprüche 1 bis 8, wobei die Gesamtdicke der Polypropylenschicht (i') und der modifizierten Polypropylenschicht (ii') in dem Behälterkörper im Bereich von 10 bis 120 µm ist und das Dickenverhältnis der Polypropylenschicht (i') zu der modifizierten Polypropylenschicht (ii') im Bereich von 40:60 bis 95:5 liegt.

10. Metallkaschierter Verbundbehälter nach einem der Ansprüche 1 bis 9, wobei die Eisen- oder Aluminiumschicht (iii') in dem Behälterkörper aus einer Eisen- oder Aluminiumfolie einer Dicke von 0,1 bis 0,35 mm gebildet ist.

11. Metallkaschierter Verbundbehälter nach einem der Ansprüche 1 bis 10, wobei der Behälterkörper weiterhin eine auf der Eisen- oder Aluminiumschicht (iii') ausgebildete äußere Kunststoffschicht aufweist, die eine Dicke von 0,3 bis 3 mm hat.

12. Metallkaschierter Verbundbehälter mit einem leicht zu öffnenden Kunststoffdeckel, welcher einen Behälterkörper und einen leicht zu öffnenden Kunststoffdeckel umfaßt, wobei ein Rand des Körpers mit einem Rand des leicht zu öffnenden Kunststoffdeckels an den Kanten verschweißt ist, wobei der Kunststoffdeckel eine Mehrschichtstruktur hat, welche (i) eine Polyethylenterephthalatschicht, (ii) eine modifizierte Polyethylenterephthalatschicht oder eine Schicht aus Polyurethan-Klebmittel, (iii) eine Aluminiumschicht, (iv) eine Haftschicht und (v) eine Polypropylenschicht umfaßt, welche von der Innenseite in Richtung zu der Außenseite des Behälters in dieser Reihenfolge angeordnet sind und wobei der Körper eine Mehrschichtstruktur hat, welche (i') eine Polyethylenterephthalatschicht, (ii') eine modifizierte Polyethylenterephthalatschicht und (iii') eine Eisen- oder Aluminiumschicht umfaßt, die von der Innenseite in Richtung der Außenseite des Behälters in dieser Reihenfolge angeordnet sind.

13. Metallkaschierter Verbundbehälter nach Anspruch 12, wobei die Polyethylenterephthalatschicht (i) in dem Kunststoffdeckel eine Dicke von 10 bis 50 µm hat.

14. Metallkaschierter Verbundbehälter nach Anspruch 12 oder 13, wobei die Aluminiumschicht (iii) in dem Kunststoffdeckel aus einer Aluminiumfolie einer Dicke von 7 bis 70 µm besteht.

15. Metallkaschierter Verbundbehälter nach einem der Ansprüche 12 bis 14, wobei die Haftschicht (iv) in dem Kunststoffdeckel aus einer Polyurethanbeschichtung besteht.

16. Metallkaschierter Verbundbehälter nach einem der Ansprüche 12 bis 15, wobei die Polypropylenschicht (v) in dem Kunststoffdeckel eine Dicke von 10 bis 70 µm hat.

17. Metallkaschierter Verbundbehälter nach einem der Ansprüche 12 bis 16, wobei der Kunststoffdeckel weiterhin eine auf der Polypropylenschicht (v) ausgebildete äußere Kunststoffschicht aufweist, die eine Dicke von 0,3 bis 3 mm hat.

18. Metallkaschierter Verbundbehälter nach einem der Ansprüche 12 bis 17, wobei die Gesamtdicke der Polyethylenterephthalatschicht (i), der Haftschicht (ii), der Aluminiumschicht (iii), der Haftschicht (iv) und der Polypropylenschicht (v) in dem Kunststoffdeckel im Bereich von 35 bis 150 µm liegt.

19. Metallkaschierter Verbundbehälter nach einem der Ansprüche 12 bis 18, wobei die modifizierte Polyethylenterephthalatschicht (ii) in dem Kunststoffdeckel und die modifizierte Polyethylenterephthalatschicht (ii') im Behälterkörper aus einem Copolyester bestehen, der Ethylenterephthalateinheiten und Einheiten aufweist, die von mindestens einer unter Polycarbonsäuren und Polyalkoholen ausgewählten Verbindung abgeleitet sind und wobei die modifizierte Polyethylenterephthalatschicht (ii) und die modifizierte Polyethylenterephthalatschicht (ii') jeweils einen Schmelzpunkt haben, der niedriger ist als der der Polyethylenterephthalatschicht (i) bzw. der Polyethylenterephthalatschicht (i').

20. Metallkaschierter Verbundbehälter nach einem der Ansprüche 12 bis 19, wobei die Gesamtdicke der Polyethylenterephthalatschicht (i') und der modifizierten Polyethylenterephthalatschicht (ii') in dem Behälterkörper im Bereich von 10 bis 120 µm ist und das Dickenverhältnis der Polyethylenterephthalatschicht (i') zu der modifizierten Polyethylenterephthalatschicht (ii') im Bereich von 40:60 bis 95:5 liegt.

21. Metallkaschierter Verbundbehälter nach einem der Ansprüche 12 bis 20, wobei die Eisen- oder Aluminiumschicht (iii') in dem Behälterkörper aus einer Eisen- oder Aluminiumfolie einer Dicke von 0,1 bis 0,35 mm besteht.

22. Metallkaschierter Verbundbehälter nach einem der Ansprüche 12 bis 21, wobei der Behälterkörper weiterhin eine auf der Eisen- oder Aluminiumschicht (iii') ausgebildete äußere Kunststoffschicht aufweist, die eine Dicke von 0,3 bis 3 mm hat.

## Revendications

1. Récipient composite de stratifié de métal avec un couvercle en matière plastique à ouverture facile, lequel comprend un corps d'un récipient et un couvercle en matière plastique à ouverture facile, une bride dudit corps étant soudée bord à bord avec une bride dudit couvercle en matière plastique à ouverture facile; ledit couvercle en matière plastique ayant une structure multicouche comprenant (i) une couche de polypropylène, (ii) une couche de polypropylène modifié, (iii) une couche d'aluminium, (iv) une couche adhésive et (v) une couche de polypropylène disposées dans cet ordre en allant de l'intérieur du récipient vers l'extérieur de celui-ci, et ledit corps ayant une structure multicouche comprenant (i') une couche de polypropylène, (ii') une couche de polypropylène modifié et (iii') une couche de fer ou d'aluminium disposées dans cet ordre en allant de l'intérieur du récipient vers l'extérieur de celui-ci.

2. Récipient composite de stratifié de métal selon la revendication 1, dans lequel la couche de polypropylène (i) dans le couvercle en matière plastique présente une épaisseur de 10 à 100 µm.

3. Récipient composite de stratifié de métal selon la revendication 1 ou 2, dans lequel la couche d'aluminium (iii) dans le couvercle en matière plastique est constituée d'une feuille en aluminium ayant une épaisseur de 7 à 70 µm.

4. Récipient composite de stratifié de métal selon l'une quelconque des revendications 1 à 3, dans lequel la couche adhésive (iv) dans le couvercle en matière plastique est constituée d'une couche de polypropylène modifié ou d'un adhésif de polyuréthane.

5. Récipient composite de stratifié de métal selon l'une quelconque des revendications 1 à 4, dans lequel ladite couche de polypropylène modifié (ii), ladite couche de polypropylène modifié constituant la couche adhésive (iv) et ladite couche de polypropylène modifié (ii') sont constituées de polypropylène ayant un groupe carboxyle ou un groupe d'anhydride d'acide, lequel a été introduit en modifiant le polypropylène avec un acide carboxylique insaturé ou un dérivé fonctionnel de celui-ci.

6. Récipient composite de stratifié de métal selon l'une quelconque des revendications 1 à 5, dans lequel la couche de polypropylène (v) dans le couvercle en matière plastique présente une épaisseur de 10 à 70 µm.

7. Récipient composite de stratifié de métal selon l'une quelconque des revendications 1 à 6, dans lequel l'épaisseur totale de la couche de polypropylène (i), de la couche de polypropylène modifié (ii), de la couche d'aluminium (iii), de la couche adhésive (iv) et de la couche de polypropylène (v) dans le couvercle en matière plastique se trouve dans l'intervalle de 35 à 200 µm.

8. Récipient composite de stratifié de métal selon l'une quelconque des revendications 1 à 7, dans lequel le couvercle en matière plastique présente en outre une couche externe en matière plastique formée sur la couche de polypropylène (v), laquelle présente une épaisseur de 0,3 à 3 mm.

9. Récipient composite de stratifié de métal selon l'une quelconque des revendications 1 à 8, dans lequel l'épaisseur totale de la couche de polypropylène (i') et de la couche de polypropylène modifié (ii') dans le corps de récipient se trouve dans l'intervalle de 10 à 120 µm et le rapport d'épaisseur de la couche de polypropylène (i') à la couche de polypropylène modifié (ii') se trouve dans l'intervalle de 40/60 à 95/5.

10. Récipient composite de stratifié de métal selon l'une quelconque des revendications 1 à 9, dans lequel la couche de fer ou d'aluminium (iii') dans le corps du récipient est constituée d'une tôle en fer ou en aluminium ayant une épaisseur de 0,1 à 0,35 mm.

11. Récipient composite de stratifié de métal selon l'une quelconque des revendications 1 à 10, dans lequel le corps du récipient présente en outre une couche externe en matière plastique formée sur la couche de fer ou d'aluminium (iii'), laquelle présente une épaisseur de 0,3 à 3 mm.

12. Récipient composite de stratifié de métal avec un couvercle en matière plastique à ouverture facile, lequel comprend un corps de récipient et un couvercle en matière plastique à ouverture facile, une bride dudit corps étant soudée bord à bord avec une bride dudit couvercle en matière plastique à ouverture facile; ledit couvercle en matière plastique ayant une structure multicouche comprenant (i) une couche de poly(éthylène/téréphtalate), (ii) une couche de poly(éthylène/téréphtalate) modifié ou une couche adhésive de polyuréthane, (iii) une couche d'aluminium, (iv) une couche adhésive et (v) une couche de polypropylène disposées dans cet ordre en allant de l'intérieur du récipient vers l'extérieur de celui-ci, et ledit corps ayant une structure multicouche comprenant (i') une couche de poly(éthylène/téréphtalate), (ii') une couche de poly(éthylène/téréphtalate) modifié et (iii') une couche de fer ou d'aluminium disposées dans cet ordre en allant de l'intérieur du récipient vers l'extérieur de celui-ci.

13. Récipient composite de stratifié de métal selon la revendication 12, dans lequel la couche de poly(éthylène/téréphtalate) (i) dans le couvercle en matière plastique présente une épaisseur de 10 à 50 µm.

14. Récipient composite de stratifié de métal selon la revendication 12 ou 13, dans lequel la couche d'aluminium (iii) dans le couvercle en matière plastique est constituée d'une feuille d'aluminium ayant une épaisseur de 7 à 70 µm.

15. Récipient composite de stratifié de métal selon l'une quelconque des revendications 12 à 14, dans lequel la couche adhésive (iv) dans le couvercle en matière plastique est constituée d'un revêtement de polyuréthane.

16. Récipient composite de stratifié de métal selon l'une quelconque des revendications 12 à 15, dans lequel la couche de polypropylène (v) dans le couvercle en matière plastique présente une épaisseur de 10 à 70 µm.

17. Récipient composite de stratifié de métal selon l'une quelconque des revendications 12 à 16, dans lequel le couvercle en matière plastique présente en outre une couche externe en matière plastique formée sur la couche de polypropylène (v), laquelle présente une épaisseur de 0,3 à 2 mm.

18. Récipient composite de stratifié de métal selon l'une quelconque des revendications 12 à 17, dans lequel l'épaisseur totale de la couche de poly(éthylène/téréphtalate) (i), de la couche adhésive (ii), de la couche d'aluminium (iii), de la couche adhésive (iv) et de la couche de polypropylène (v) dans le couvercle en matière plastique se trouve dans l'intervalle de 35 à 150 µm.
